Europäisches Patentamt

European Patent Office

Office européen des brevets

(11) Veröffentlichungsnummer: **0 103 838**
**A2**

(12) # EUROPÄISCHE PATENTANMELDUNG

(21) Anmeldenummer: **83109010.5**

(22) Anmeldetag: **13.09.83**

(51) Int. Cl.³: **B 60 H 3/00**

(30) Priorität: **21.09.82 US 420671**

(43) Veröffentlichungstag der Anmeldung:
**28.03.84 Patentblatt 84/13**

(84) Benannte Vertragsstaaten:
**DE FR GB**

(71) Anmelder: **DEERE & COMPANY**
**1 John Deere Road**
**Moline Illinois 61265(US)**

(72) Erfinder: **Sisk, Robert Michael**
**2111 Iowa Street**
**Davenport Iowa 52803(US)**

(72) Erfinder: **·Lewis, William Lee**
**5695 Sunset Drive**
**Dubuque Iowa 52001(US)**

(74) Vertreter: **Feldmann, Bernhard et al,**
**DEERE & COMPANY European Office, Patent**
**Department Steubenstrasse 36-42 Postfach 503**
**D-6800 Mannheim 1(DE)**

(54) **Kühl- und Heizungsvorrichtung für Räume, insbesondere Fahrzeugkabinen.**

(57) Hinter einem Kühlteil (29) ist in dem gleichen Gehäuse (27) eine Heizung (31) derart angeordnet, daß sie nur zu einer der Gehäusewände (33) Abstand aufweist. Dieser Bereich wird durch eine verschwenkbare Klappe (59) überbrückt, die in Abhängigkeit von dem Betrieb der Heizung derart verstellbar ist, daß bei voll zugeschalteter Heizung (31) der gesamte Luftstrom durch die Heizung geführt wird, wohingegen bei ausgeschalteter Heizung (31) die Klappe (39) in eine Offenstellung verstellt wurde, in der zumindest ein Teil des Luftstroms an der Heizung vorbeigeführt wird.

EP 0 103 838 A2

./...

Croydon Printing Company Ltd

FIG. 2

Kühl- und Heizungsvorrichtung für Räume, insbesondere
Fahrzeugkabinen

Die Erfindung bezieht sich auf eine Kühl- und Heizungsvorrichtung für Räume, insbesondere Fahrzeugkabinen, mit einem
mit Luft durchströmten Kanalsystem, in dem ein Kühlteil,
eine Heizung und ein verstellbares Umgehungsglied vorgesehen sind, über das die Luft zumindest teilweise an der Heizung vorbei oder vollständig durch die Heizung geführt
werden kann.

Bei einer derartigen Kühl- und Heizungsvorrichtung (US-PS
3 555 846) ist ein Gebläse vorgesehen, über das ein Luftstrom in Abhängigkeit von der Stellung des als schwenkbare
Klappe ausgebildeten Umgehungsgliedes dem Kühlteil in Form
einer Kühlschlange oder der Heizung zugeführt wird, wobei
Kühlteil und Heizung in voneinander getrennten Gehäuseteilen angeordnet sind, so daß der Luftstrom in verschiedene
Kanäle geführt wird, je nachdem, ob die Luft erwärmt wurde
oder nicht. In einer Mitten- oder Zwischenstellung des
Umgehungsgliedes wird der Luftstrom aufgeteilt, so daß die
Blaswirkung ohne zusätzliche Gebläse verringert wird. Damit
sind aber unterschiedliche Kanäle für Warm- und Kaltluft
erforderlich, wodurch die Gesamtvorrichtung zu aufwendig
und die Blaswirkung unter Umständen zu gering wird. Ob die
Heizung bei dieser Vorrichtung immer eingeschaltet bleibt,
ist in dieser Druckschrift nicht offenbart.

Die mit der Erfindung zu lösende Aufgabe wird darin gesehen, eine einfache Bauweise sicherzustellen, die es darüber
hinaus noch in Abhängigkeit von der Einschaltstellung der
Heizung ermöglichen kann, daß bei nicht oder nicht voll
eingeschalteter Heizung zumindest ein Teil des Luftstroms
nicht durch die Heizung, sondern an der Heizung vorbeigeführt wird.

Diese Aufgabe ist gemäß der Erfindung dadurch gelöst worden, daß die Heizung mit Bezug auf die Strömungsrichtung der Luft unmittelbar hinter dem Kühlteil angeordnet ist und/oder die Betätigung für die Heizung und das Umgehungsglied miteinander derart zwangsverbunden sind, daß die Heizung nur voll aufheizbar ist, wenn sich das Umgehungsglied in einer Stellung befindet, in der die Luft vollständig durch die Heizung geführt wird.

Auf diese Weise sind Kühlteil, der der Verdampfer einer Klimaanlage sein kann, und Heizung in einem gemeinsamen Gehäusekanal angeordnet, so daß getrennte Luftwege für Warm- oder Kaltluft und damit auch zusätzliche Gebläse nicht benötigt werden. Die Zwangssteuerung des Umgehungsgliedes verhindert ein Aufheizen der Heizung, wenn die Temperaturen in der Fahrzeugkabine es nicht erfordern, was über eine für Kühlteil und Heizung gemeinsame Betätigung in einfacher Weise erfolgt.

Für eine Kühl- und Heizungsvorrichtung, bei der das Umgehungsglied als schwenkbare Klappe ausgebildet ist und die in einem Gehäuse angeordnete Heizung zu einer Gehäusewand Abstand aufweist, wird nach der Erfindung vorgeschlagen, daß die Klappe in dem Bereich, in dem die Heizung zur Gehäusewand Abstand aufweist, vorgesehen und über ein Gestänge mit einem Heizungsventil verbunden ist. Hierdurch wird infolge der Anordnung der Heizung hinter dem Kühlteil der durch den Kühlteil geführte Luftstrom unmittelbar auf den Gehäuseteil treffen, der die Heizung aufnimmt und bei sich in Schließstellung befindlicher Klappe vollständig durch die Heizung geführt. Bei sich in ihrer Offenstellung befindlicher Klappe wird dagegen ein beträchtlicher Teil des Luftstroms an der Heizung in demselben Gehäuse vorbeigeführt, wobei infolge der Verbindung der Klappe mit dem Heizungsventil über ein Gestänge die Klappe in einfacher Weise in Abhängigkeit von der Betätigung des Heizungsventils verstellt wird.

Im einzelnen ist hierzu die Heizung erfindungsgemäß mit einer Einlaßleitung versehen und weist eine in die Einlaßleitung eingesetzte, aus einer Schließstellung in eine Offenstellung verschwenkbare, an einem Stift angeordnete Klappe auf, wobei der Stift drehbar in die Einlaßleitung eingesetzt und mit einem aus der Einlaßleitung überstehenden Ende versehen ist, an das ein Ausleger fest angeordnet ist, der über einen weiteren Ausleger mit der Klappe an der Heizung gelenkig in Verbindung steht.

Dabei ist die Anordnung derart zu treffen, daß sich die Klappe des Heizungsventils in ihrer Offenstellung befindet, wenn die Klappe an der Heizung in ihrer Schließstellung steht.

Zweckmäßig ist die Klappe des Heizungsventils über einen an dem Stift angreifenden Bowdenzug entgegen der Wirkung einer Feder aus ihrer Offenstellung in ihre Schließstellung verschwenkbar.

Damit wirkt die Feder auch auf die Klappe der Heizung, so daß diese Klappe entgegen der Federwirkung in ihre Offenstellung verschwenkbar ist.

Natürlich braucht die Luft, wenn sie über die Heizung erwärmt werden soll, vorher nicht gekühlt zu werden, weshalb nach einem weiteren Merkmal der Erfindung vorgeschlagen wird, daß der Kühlteil zu einer Gehäusewand Abstand aufweist und in diesem Bereich eine weitere Klappe vorgesehen ist, die über ein Gestänge mit dem Heizungsventil in Verbindung steht.

In der Zeichnung ist ein nachfolgend näher erläutertes
Ausführungsbeispiel der Erfindung dargestellt. Es zeigt:

Fig. 1 eine Fahrzeugkabine;

Fig. 2 ein einen Verdampfer und eine Heizung aufweisendes Gehäuse;

Fig. 2a einen Schnitt nach der Linie 2a – 2a in
Fig. 2.

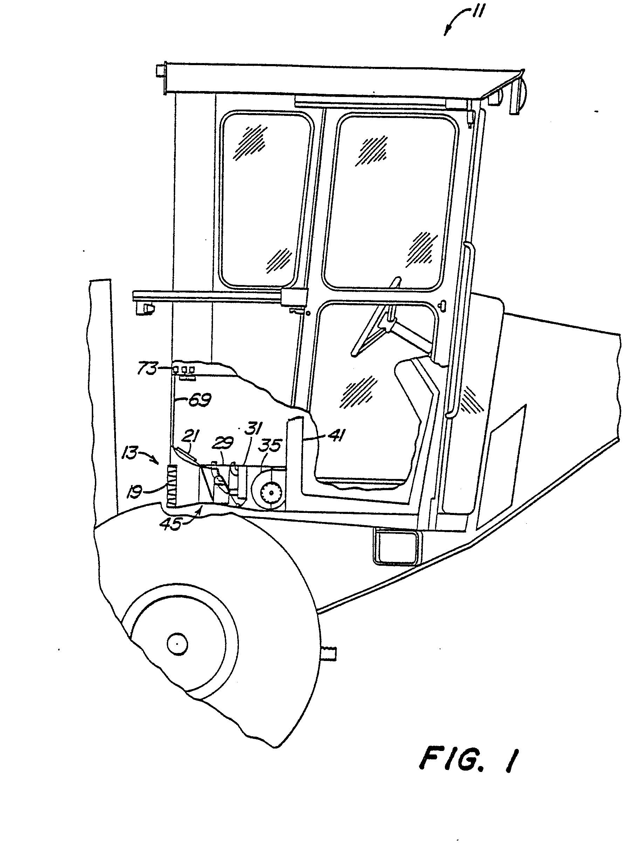

Eine in Fig. 1 wiedergegebene Fahrzeugkabine 11 kann mit
einer Klima- und Heizungsanlage ausgerüstet sein. Hierzu
ist die Fahrzeugkabine 11 isoliert ausgebildet und weist
in ihrem unteren Bereich ein Lufteinlaßsystem 13 auf.
Letzteres ist mit einem Kanal 15 versehen, in den eine
Einlaßöffnung 19 für Frischluft von außerhalb der Fahrzeugkabine und eine Einlaßöffnung 21 für Kabinenluft
münden. Beide Einlaßöffnungen 19 und 21 sind mit Filtern
zum Ausfiltern von sich in der Luft befindlichen Fremdpartikeln versehen. Der Kanal 15 ist derart ausgebildet,
daß er einen sich im wesentlichen längs erstreckenden
Durchgang 23 bildet, der in eine sich ebenfalls längs
erstreckende Kammer 25 übergeht, die von einem Gehäuse
27 gebildet ist und einen Kühlteil aufnimmt, der als
Verdampfer 29 einer nicht weiter dargestellten Klimaanlage ausgebildet sein kann. Der Verdampfer 29 selbst ist
mit Abstand zu einer Seitenwand 33 des Gehäuses 27 in der
Kammer 25 fest angeordnet und befindet sich mit Bezug auf
die Luftrichtung vor einer Heizung 31, die ebenfalls in
der Kammer 25 fest angeordnet ist und zu einer der Seitenwände 33 des Gehäuses 27 Abstand aufweist. Mit Bezug auf
die Luftrichtung hinter der Heizung 31 ist noch in der
Kammer 25 ein Zentrifugalgebläse 35 vorgesehen, das einen
Einlaß 37 und einen Auslaß 39 aufweist, der in einen Luftkanal 41 mündet. Die Heizung ist noch mit einer Ein- und einer Auslaßleitung 43 und 47 versehen, die durch das Gehäuse 27 geführt sind und mit einem der Einfachheit halber
nicht in der Zeichnung dargestellten Motorblock verbunden sein können, um die Heizung über die Kühlflüssigkeit
aufheizen zu können. Über ein Heizungsventil 45 in der
Einlaßleitung 43 kann der Fluß der Kühlflüssigkeit nach den
Wünschen des Fahrers geregelt (geringere oder stärkere Heizwirkung) oder auch ganz abgestellt werden.

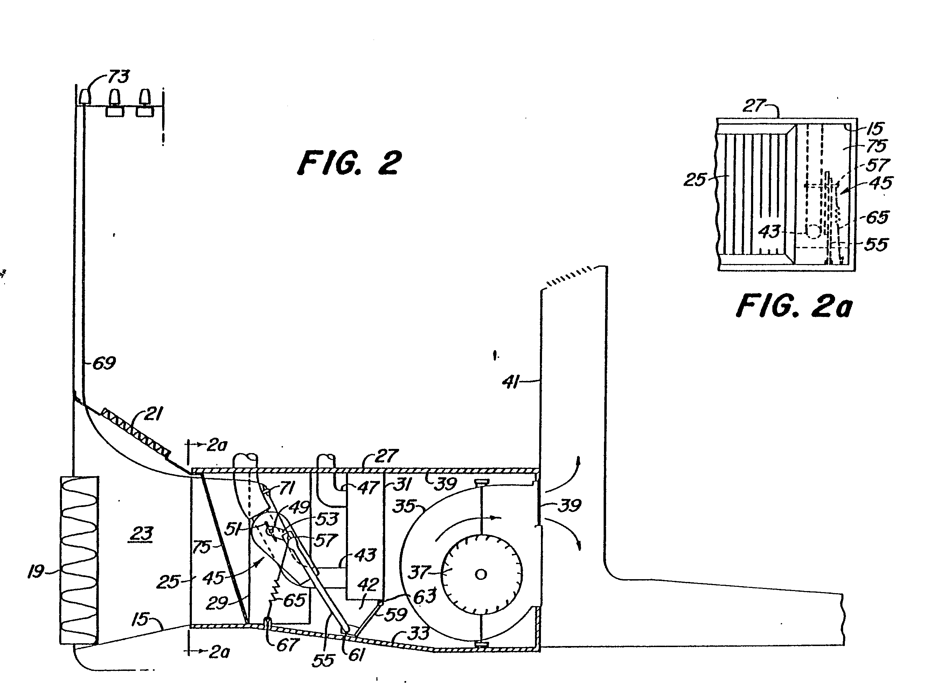

Das Heizungsventil 45 ist als Klappenventil ausgebildet
und somit mit einem den Querschnitt der Einlaßleitung 43
radial durchsetzenden und drehbaren Stift 49 versehen,
auf dem eine dem Innendurchmesser der Einlaßleitung angepaßte, aus einer in Fig. 2 dargestellten Offenstellung in
eine Schließstellung verstellbare Klappe 51 fest angeordnet ist. Zum Verschwenken dieser Klappe bzw. zum Drehen des
Stiftes 49 ist an letzterem an seinem aus der Einlaßleitung
43 überstehenden Ende ein erster Ausleger 53 fest angeordnet, der wiederum mit einem zweiten Ausleger 55 über einen
Zapfen 57 gelenkig verbunden ist. Das dem Zapfen 57 abgelegene Ende des zweiten Auslegers 55 erstreckt sich bis
etwa in Bodennähe des Gehäuses 27 und ist dort bei 61 an
eine als Umgehungsglied dienende Klappe 59 angelenkt. Die
Klappe 59 ist über ein Scharnier 63 an die Bodenseite
der Heizung 31 angeschlossen und so ausgebildet, daß sie in
ihrer in Fig. 2 wiedergegebenen Stellung den freien Abstand
zwischen der Heizung 31 und der Gehäusewand 33 überbrückt
und damit diesen Raum verschließt, so daß in dieser Stellung die von dem Zentrifugalgebläse 35 angesaugte Luft
durch die Heizung 31 durchtreten muß. Über den Ausleger
55 kann die Klappe 59 in eine Offenposition geschwenkt
werden, in der dann zumindest ein Teil der angesaugten
Luft nicht durch die Heizung hindurchtreten muß.

Die Klappen 51 und 59 sind gemeinsam derart betätigbar,
daß, wenn eine Klappe geschlossen ist, die andere sich in ihrer Offenposition befindet. Selbstverständlich können die Klappen auch eine Vielzahl von Zwischenstellungen einnehmen. Über eine Feder 65 jedoch, die einenends an dem Zapfen 57 und anderenends bei 67 an der Gehäusewand 33 angreift, werden die Klappen in ihre in Fig. 2 wiedergegebenen Stellungen gezogen. Zur Betätigung der Klappen 51 und 59 dient ein Bowdenzug 69 oder dergleichen, dessen Draht ebenfalls an dem Zapfen 57 angreift und dessen eines Mantelende mit einem Halter 71 fest verbunden ist. Das andere Ende des Bowdenzuges ist mit einem Betätigungsglied 73 verbunden, das wiederum im Kabineninneren vorgesehen ist.

Alle zum Verdampfer 29 gelangende Luft wird zuerst durch eine Prallplatte 75 geführt, die damit auch die Einlaßleitung 43 und das Heizungsventil 45 abschirmt.

Im Einsatz tritt durch die Einlaßöffnungen 19 und 21 gefilterte Luft ein, wobei die durch die Einlaßöffnung 21 eintretende Luft gegebenenfalls klimatisiert ist. Die Luft wird von dem Zentrifugalgebläse 35 angesaugt und durch die Heizung 31 bzw. zwischen deren Rippen oder Rohre geführt, wenn sich das Heizungsventil 45 in seiner Offenstellung und die Klappe 59 in ihrer Schließstellung nach Fig. 2 befinden. Je nach dem Verstellen des Betätigungsgliedes 73 kann das Heizungsventil 45 eine Vielzahl von Stellungen einnehmen, die von der Offenstellung bis zur Schließstellung bzw. umgekehrt reichen, wobei die Klappe 59 entsprechende Stellungen aber in umgekehrter Reihenfolge einnimmt. Das heißt, bei vollständig geöffnetem Heizungsventil 45 befindet sich die Klappe in ihrer vollständig geschlossenen Stellung, in der damit alle Luft durch die Heizung 31 geführt und damit entsprechend erwärmt wird. Befindet sich dagegen das Heizungsventil 45 in seiner vollständig geschlossenen Position, dann nimmt die Klappe 59 ihre vollständig geöffnete Stellung ein und ein beträchtlicher Luftstrom wird an der Heizung vorbeigeführt. Je nachdem, wie stark die Heizung 31 dann noch aufgeheizt ist, wird der dann noch durch die Heizung geführte Luftstrom kaum oder überhaupt nicht mehr erwärmt. In den Zwischenstellungen nimmt der Luftstrom entsprechende Zwischentemperaturen an. Durch die Kombination der Stellung des Heizungsventils mit der der Klappe lassen sich an der Heizung linearere Temperaturcharakteristika erzielen.

Selbstverständlich kann im Rahmen der Erfindung auch der Verdampfer mit einer Klappe versehen werden, die in Abhängigkeit vom Heizungsventil betätigbar ist und es erlaubt, daß zumindest bei voll zugeschalteter Heizung ein Teil des Luftstroms am Verdampfer vorbeigeführt und dann nicht mehr gekühlt wird.

Patentansprüche

1. Kühl- und Heizungsvorrichtung für Räume, insbesondere Fahrzeugkabinen, mit einem mit Luft durchströmten Kanalsystem, in dem ein Kühlteil (29), eine Heizung und ein verstellbares Umgehungsglied vorgesehen sind, über das die Luft zumindest teilweise an der Heizung vorbei oder vollständig durch die Heizung geführt werden kann, dadadurch gekennzeichnet, daß die Heizung (31) mit Bezug auf die Strömungsrichtung der Luft unmittelbar hinter dem Kühlteil (29) angeordnet ist und/oder die Betätigung für die Heizung (31) und das Umgehungsglied miteinander derart zwangsverbunden sind, daß die Heizung nur voll aufheizbar ist, wenn sich das Umgehungsglied in einer Stellung befindet, in der die Luft vollständig durch die Heizung geführt wird.

2. Kühl- und Heizungsvorrichtung nach Anspruch 1, wobei das Umgehungsglied als schwenkbare Klappe (59) ausgebildet ist und die in einem Gehäuse (27) angeordnete Heizung (31) zu einer Gehäusewand (33) Abstand aufweist, dadurch gekennzeichnet, daß die Klappe (59) in dem Bereich, in dem die Heizung (31) zur Gehäusewand (33) Abstand aufweist, vorgesehen und über ein Gestänge mit einem Heizungsventil (45) verbunden ist.

3. Kühl- und Heizungsvorrichtung nach Anspruch 2, dadurch gekennzeichnet, daß die Heizung (31) mit einer Einlaßleitung (43) versehen ist und das Heizungsventil (45) eine in die Einlaßleitung eingesetzte, aus einer Schließstellung in eine Offenstellung verschwenkbare, an einem Stift (49) angeordnete Klappe (51) aufweist, wobei der Stift (49) drehbar in die Einlaßleitung eingesetzt und mit einem aus der Einlaßleitung überstehenden Ende versehen ist, an das ein Ausleger (53) fest angeordnet ist, der über einen weiteren Ausleger (55) mit der Klappe (59) an der Heizung (31) gelenkig in Verbindung steht.

4. Kühl- und Heizungsvorrichtung nach einem oder mehreren der vorherigen Ansprüche, dadurch gekennzeichnet, daß die Klappe (51) des Heizungsventils (45) über einen an dem Stift (49) angreifenden Bowdenzug (69) aus ihrer Offenstellung in ihre Schließstellung verschwenkbar ist.

5. Kühl- und Heizungsvorrichtung nach einem oder mehreren der vorherigen Ansprüche, dadurch gekennzeichnet, daß der Kühlteil (29) zu einer Gehäusewand (33) Abstand aufweist und in diesem Bereich eine weitere Klappe vorgesehen ist, die über ein Gestänge mit dem Heizungsventil (45) in Verbindung steht.

0103838

FIG. 1

FIG. 2

FIG. 2a